# EUROPEAN PATENT APPLICATION

(11) **EP 4 477 889 A1**
(43) Date of publication of application: **18.12.2024**
(21) Application number: 24179250.6
(22) Date of filing: 31.05.2024
(51) Int. Cl.: F04D 25/06, A01G 20/47, F04D 25/08, F04D 29/32, F04D 29/38, F04D 29/54, F04D 29/66

(54) **PORTABLE BLOWER**

(30) Priority: 15.06.2023 IT 202300012336
(71) Applicant: Stiga S.p.A., 31033 Castelfranco Veneto (TV) (IT)
(72) Inventor: PANDIN, Enrico, 31020 Villorba (TV) (IT)
(74) Representative: PGA S.p.A.

(57) **Abstract**

A blower (1) comprises: a structure (2) defining a conduit (3) for the transit of an air flow between a suction zone (4) and a blowing opening (10); a flow generator (6) operatively arranged inside the structure (2) which is switchable between a non-operating condition, in which no air flow is generated along the conduit (3) and an operating condition, in which an air flow is generated along the conduit (3). The flow generator (6) comprises a rotor (7) operatively arranged inside the conduit (3) and arranged to rotate about a rotation axis (Y). The rotor (7) is provided with a central portion (7a) and a plurality of blades (7b) distributed around the central portion (7a). The flow generator (6) also comprises a straightening stator (8) operatively arranged inside the conduit (3) between the rotor (7) and the blowing opening (10) to straighten the air flow generated by the rotor (7) when the flow generator (6) is in the operating condition. The straightening stator (8) comprises a central portion (9) and a plurality of straightening blades (11) circumferentially distributed around the central portion (9). The total number of straightening blades (11) of the straightening stator (8) differs from the total number of blades (7b) of the rotor (7) and are coprime.

## Description

### Technical field

The present invention relates to a portable blower of the type usable in outdoor areas, such as roads, gardens, parks and/or the like, for blowing and pushing leaves, small debris, garbage and the like.

### Prior art

Several portable blowers are known which can be used in outdoor areas, such as roads, gardens, parks and/or the like, for blowing and pushing leaves, more or less small debris, garbage and the like.

Generally, the known portable blowers comprise a casing or a hollow main body inside which a conduit is defined for the transit of an air flow between a suction zone and a blowing end. The casing can vary in shape and size depending on the model and type of portable blower considered. However, the casing of portable blowers generally has a substantially tubular structure which can be made in a single piece or defined by two or more portions appropriately connected to each other. The air transit conduit extends along the tubular structure to end, at the blowing end, with a blowing opening which, during use, is maintained by the user, oriented towards the area of the ground, the soil or the road on which it is desired to act by means of blowing.

In order to be able to generate a blowing air flow along the transit conduit, portable blowers are normally provided with corresponding flow generator devices which have one or more axial blade impellers which are driven in rotation by suitable electric or endothermic motors. The flow generator devices reside inside the tubular structure or the casing of the portable blowers with the axial impellers active inside the transit conduits.

Since the axial impellers of the flow generator devices of the known portable blowers produce a swirling air flow, it is common practice to arrange, downstream of such axial impellers, one or more stabilizers or blade straighteners, which have the primary purpose of straightening the swirling air flow produced by the axial impellers so that the air in output through the blowing opening is hardly subject to unwanted turbulence or recirculation.

Depending on the models of portable blowers which can be found on the market, the number of axial impeller blades, like the number of stabilizer or straightener blades, varies from producer to producer in relation to different needs and requirements. It is therefore possible to find portable blowers having axial impellers with a different total number of blades from the total number of blades of the stabilizers or straighteners, as it is possible to find blowers having axial impellers and stabilizers or straighteners having the same total number of blades.

With particular reference to the known portable blowers which have a difference between the total number of blades of the axial impellers and the total number of the blades of the stabilizers or straighteners, in some cases the total number of impeller blades is greater than the total number of blades of the stabilizers or straighteners, in other cases it is lower.

Although the known solutions related to the flow generator devices of portable blowers allow a satisfactory production of air for blowing both in relation to the blowing intensity and in relation to the quality of the output air flow, the Applicant has found that the flow generator devices provided on the known portable blowers are not free from some drawbacks and are improved in several respects, mainly in relation to the efficiency and quality of the air flow in blowing and in output from the blowing opening during the operation of the relative flow generator devices, to the excessive structural vibrations which are generated during operation and increase in proportion to the number of revolutions of the rotating axial impellers, as well as to the high noise which is produced during operation.

In particular, the Applicant has found that the efficiency and quality of the output and blowing air flow, like the vibrations and noise generated during the operation of the flow generator devices provided with the known portable blowers, significantly depend on the total number of blades present on the impellers and on the stabilizers or straighteners. When the total number of impeller blades and the total number of stabilizer or straightener blades have multiples or sub-multiples in common, the system tends to produce excessive vibration and noise. Furthermore, the efficiency of the air flow produced and its quality, understood as flow homogeneity and linearity, also tend to decrease under conditions of vibration and noise.

### Object of the invention

The main object of the present invention is to resolve one or more of the problems detected in the prior art.

It is an object of the present invention to propose a portable blower of the type usable in outdoor areas, such as roads, gardens, parks and/or the like, for blowing and pushing leaves, small debris, garbage and the like which produces efficient, high quality blowing air in output, understood as homogeneity, linearity and absence of unwanted turbulence. It is a further object of the present invention to propose a portable blower which does not have vibrations or minimizes vibrations during the operation of the flow generator device.

It is further an object of the present invention to propose a portable blower which does not produce noise or minimizes noise during the operation of the flow generator device.

These objects and still others, which will appear more fully from the following disclosure, are substantially achieved by a portable blower of the type usable in outdoor areas, such as roads, gardens, parks and/or the like, for blowing and pushing leaves, small debris, garbage and the like in accordance with what is expressed in one or more of the appended claims and/or the following aspects, taken alone or in combination with each other.

### Summary of the invention

The aspects of the invention are disclosed herein.

In a 1st independent aspect of the present invention, a portable blower (1) is provided comprising:
- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) which is switchable between a non-operating condition, in which no air flow is generated along the conduit (3) of the structure (2) and an operating condition, in which an air flow is generated along the conduit (3) of the structure (2) between the suction zone (4) and the blowing end (5) or the blowing opening (10), wherein the flow generator device (6) comprises:
   ∘ an axial rotor (7) operatively arranged inside the conduit (3) of the structure (2) and arranged to rotate about a rotation axis (Y), the axial rotor (7) being provided with a central portion (7a) and with a plurality of peripheral blades (7b) circumferentially distributed around the central portion (7a), the peripheral blades (7b) of the axial rotor (7) being separated from each other to define a corresponding plurality of peripheral channels (7f), the axial rotor (7) being rotatably drivable about the corresponding rotation axis (Y) when the flow generator device (6) is switched in the operating condition to generate an air flow along the conduit (3) towards the blowing opening (10);
   ∘ an axial straightening stator (8) operatively arranged inside the conduit (3) of the structure (2) between the axial rotor (7) and the blowing end (5) or the blowing opening (10) of the portable blower (1) to straighten the air flow generated by the axial rotor (7) when the flow generator device (6) is in the operating condition, the axial straightening stator (8) comprising a central portion (9) and a plurality of peripheral straightening blades (11) circumferentially distributed around the central portion (9), the peripheral straightening blades (11) being separated from each other to define a corresponding plurality of peripheral straightening channels (12),
wherein a total number of the peripheral straightening blades (11) of the axial straightening stator (8) differs from a total number of the peripheral blades (7b) of the axial rotor (7), the total number of the peripheral straightening blades (11) of the axial straightening stator (8) and the total number of the peripheral blades (7b) of the axial rotor (7) being coprime.

In a 2nd aspect in accordance with the preceding aspect, the total number of peripheral straightening blades (11) of the axial straightening stator (8) differs from the total number of peripheral blades (7b) of the axial rotor (7) by not more than three units and in particular by one unit, i.e., by one blade.

In a 3rd aspect in accordance with any one of the preceding aspects, the total number of peripheral straightening blades (11) of the axial straightening stator (8) is neither a sub-multiple, nor a multiple of the total number of peripheral blades (7b) of the axial rotor (7) and vice versa.

In a 4th aspect in accordance with any one of the preceding aspects, the total number of straightening blades (11) of the axial straightening stator (8) and the total number of peripheral blades (7b) of the axial rotor (7) have no common divider except for the number one.

In a 5th aspect in accordance with any one of the preceding aspects, the total number of peripheral straightening blades (11) of the axial straightening stator (8) is less than the total number of peripheral blades (7b) of the axial rotor (7) by one unit, i.e., by one blade.

In a 6th aspect in accordance with any one of the five preceding aspects, the total number of peripheral straightening blades (11) of the axial straightening stator (8) is less than or equal to twenty-three and in particular corresponds to eleven or twelve, while the total number of peripheral blades (7b) of the axial rotor (7) is less than or equal to twenty-three and in particular corresponds to twelve or eleven.

In a 6th-bis aspect in accordance with any one of the five preceding aspects, the total number of peripheral straightening blades (11) of the axial straightening stator (8) is greater than or equal to seven and in particular corresponds to eleven or twelve, while the total number of peripheral blades (7b) of the axial rotor (7) is greater than or equal to seven and in particular corresponds to twelve or eleven.

In a 7th aspect in accordance with any one of the aspects from the 1st to 4th, the total number of peripheral straightening blades (11) of the axial straightening stator (8) is greater than the total number of peripheral blades (7b) of the axial rotor (7) by one unit, i.e., by one blade.

In an 8th aspect in accordance with any one of the aspects from the 1st to 4th and 7th, the total number of peripheral straightening blades (11) of the axial straightening stator (8) corresponds to twelve, while the total number of peripheral blades (7b) of the axial rotor (7) corresponds to eleven.

In a 9th aspect in accordance with any one of the preceding aspects, the peripheral straightening blades (11) of the axial straightening stator (8) are identical to each other.

In a 10th aspect in accordance with any one of the preceding aspects, the peripheral straightening blades (11) of the axial straightening stator (8) are angularly equidistant.

In a 10th-bis aspect in accordance with any one of the preceding aspects, the peripheral straightening blades (11) of the axial straightening stator (8) are distributed symmetrically with respect to a central axis of the axial straightening stator (8), optionally coinciding with the rotation axis (Y).

In an 11th aspect in accordance with any one of the preceding aspects, each peripheral straightening blade (11) of the axial straightening stator (8) has a maximum thickness comprised between 1.2 mm and 1.8 mm, optionally substantially equal to 1.5 mm.

In a 12th aspect in accordance with any one of the preceding aspects, wherein each peripheral straightening blade (11) of the axial straightening stator (8) has a maximum longitudinal extension, detectable between a corresponding inlet edge (11a) facing the axial rotor (7) and a corresponding outlet edge (11b), facing the opposite side with respect to the axial rotor (7), along the longitudinal extension axis (X) of the structure (2) and/or of the conduit (3) of the portable blower (1), comprised between 25 mm and 35 mm, optionally equal to 30 mm.

In a 13th aspect in accordance with any one of the preceding aspects, each peripheral straightening blade (11) of the axial straightening stator (8) has a substantially arched and/or twisted extension, with a profile which is more rounded and inclined with respect to a reference plane transverse to the conduit (3) of the structure (2) of the blower (1) at a respective inlet edge (11a) substantially facing the axial rotor (7), and with a less rounded and inclined profile with respect to a reference plane transverse to the conduit (3) of the structure (2) of the blower (1) at a respective outlet edge (11b) facing opposite with respect to the axial rotor (7), optionally tending to a profile substantially parallel to the longitudinal extension axis (X) of the structure (2) and/or of the conduit (3) of the latter and/or of the rotation axis of the axial rotor (7).

In a 14th aspect in accordance with any one of the preceding aspects, the axial straightening stator (8) further has an outer cap (13) which, together with the central portion (9) of the latter, defines a corresponding conduit (14) for the transit of an air flow when the flow generator device (6) is in the operating condition, the conduit (14) for the transit of the air flow defining a longitudinal portion of the conduit (3) of the structure (2) of the portable blower (1).

In a 15th aspect in accordance with the preceding aspect, the peripheral straightening blades (11) extend between the central portion (9) and the outer cap (13) of the axial straightening stator (8).

In a 16th aspect in accordance with any one of the two preceding aspects, the peripheral straightening blades (11) are joined in a single piece with the central portion (9) and the outer cap (13) of the axial straightening stator (8) to form a single monoblock body with the latter.

In a 16th-bis aspect in accordance with any one of the three preceding aspects, the outer cap (13) has an annular shape and has an inner surface of cylindrical extension (13a) to which the peripheral straightening blades (11) are connected.

In a 16th-ter aspect in accordance with the preceding aspect, the inner surface of cylindrical extension (13a) is parallel to an outer cylindrical surface (9e) of the central portion (9) of the axial straightening stator (8), to which the peripheral straightening blades (11) are connected.

In a 17th aspect in accordance with any one of the preceding aspects, the central portion (9) of the axial straightening stator (8) is internally hollow to define at least one housing chamber (9a) for a motor (15), optionally electric, for driving the flow generator device (6), in particular for driving the axial rotor (7) of the latter in rotation about the rotation axis (Y).

In an 18th aspect in accordance with the preceding aspect, the central portion (9) of the axial straightening stator (8) has a through opening (9b) extending substantially centrally and longitudinally, a transmission shaft (15a) of the motor (15) extending through the through opening (9b) of the central portion (9) of the axial straightening stator (8) and being keyed, on the side opposite the latter, to the central portion (7a) of the axial rotor (7) for rotating the axial rotor (7) about the respective rotation axis (Y) when the flow generator device is in the operating condition.

In a 19th aspect in accordance with any one of the preceding aspects, the central portion (9) of the axial straightening stator (8) has, on the opposite side with respect to the axial rotor (7), at least one outlet body (9c) of slender and/or tapered shape.

In a 20th aspect in accordance with any one of the preceding aspects, the central portion (9) of the axial straightening stator (8) has, on the opposite side with respect to the axial rotor (7), at least one outlet body (9c) of substantially ogive shape.

In a 21th aspect in accordance with any one of the preceding aspects, the central portion (9) of the axial straightening stator (8) has, on the opposite side with respect to the axial rotor (7), at least one outlet body (9c) of substantially pointed shape.

In a 22nd aspect in accordance with any one of the three preceding aspects when dependent on the 17th or 18th aspect, the outlet body (9c) of the central portion (9) of the axial straightening stator (8) is removable from the central portion (9) to allow an access to the housing chamber (9a).

In a 23rd aspect in accordance with any one of the four preceding aspects when dependent on the 17th or 18th aspect, the outlet body (9c) of the central portion (9) of the axial straightening stator (8) is completely closed without having any communication opening between the housing chamber (9a) and the part of the conduit (3) of the structure (2) of the portable blower (1) which is located downstream of the axial straightening stator (8) in the advancement direction of the air flow when the flow generator device (6) is in the operating condition.

In a 24th aspect in accordance with any one of the 19th to 22nd aspects when dependent on the 17th or 18th aspect, the outlet body (9c) of the central portion (9) of the axial straightening stator (8) has a plurality of through openings (9d) which put the housing chamber (9a) in fluid communication with the part of the conduit (3) of the structure (2) of the portable blower (1) located downstream of the axial straightening stator (8) in the advancement direction of the air flow when the flow generator device (6) is in the operating condition.

In a 25th aspect in accordance with any one of the preceding aspects, the peripheral blades (7b) of the axial rotor (7) are identical to each other.

In a 26th aspect in accordance with any one of the preceding aspects, the peripheral blades (7b) of the axial rotor (7) are angularly equidistant.

In a 27th aspect in accordance with any one of the preceding aspects, each peripheral blade (7b) of the axial rotor (7) has a thickness comprised between 1 mm and 3 mm, optionally comprised between 1.5 mm and 2.3 mm, in particular substantially equal to 1.8 mm.

In a 28th aspect in accordance with any one of the preceding aspects, each peripheral blade (7b) of the axial rotor (7) has an overall dimension, detectable between a corresponding inlet edge (7c), facing opposite the axial straightening stator (8) and a respective outlet edge (7d), facing the axial straightening stator (8), along the longitudinal extension axis (X) of the structure (2) and/or of the conduit (3), comprised between 15 mm and 22 mm, optionally comprised between 18 mm and 19 mm.

In a 29th aspect in accordance with any one of the preceding aspects, each peripheral blade (7b) of the axial rotor (7) has a substantially twisted extension, with an inclined profile with respect to a reference plane transverse to the conduit (3) of the structure (2) of the portable blower (1).

In 30th aspect in accordance with the preceding aspect, in which the peripheral blades (7b) of the axial rotor (7) are arranged according to orientations convergent to the peripheral straightening blades (11) of the axial straightening stator (8).

In a 31st aspect in accordance with any one of the preceding aspects, each peripheral blade (7b) of the axial rotor (7) extends from the central portion (7a) of the latter to end with a respective end edge (7e) at an inner surface of the conduit (3) of the structure (2) of the portable blower (1).

In a 31st-bis aspect in accordance with the 16th-bis aspect or any of the aspects from the 16th-ter to the 30th when dependent on the 16th-bis aspect, each peripheral blade (7b) of the axial rotor (7) extends from the central portion (7a) of the latter to end with a respective end edge (7e) at an inner surface of cylindrical extension (13a) of the outer cap (13) of the axial straightening stator (8).

In a 32nd aspect in accordance with the 14th aspect or any one of the aspects from the 15th to the 31st when dependent on the 14th aspect, each peripheral blade (7b) of the axial rotor (7) extends from the central portion (7a) of the latter to end with a respective end edge (7e) at an inner surface of the conduit (14) defined by the outer cap (13) of the axial straightening stator (8).

In a 33rd aspect in accordance with any one of the three preceding aspects or the combination of at least two of the preceding aspects, the end edge (7e) of each peripheral blade (7b) of the axial rotor (7) is spaced from the inner surface of the conduit (3) of the structure (2) of the portable blower (1) or from the inner surface of the conduit (14) of the outer cap (13) of the straightening stator (8) or from the inner surface of cylindrical extension (13a) of the outer cap (13) of the straightening stator (8) by a measurement comprised between and 0.7 mm and 0.3 mm, optionally substantially equal to 0.5 mm.

In a 34th aspect in accordance with any one of the preceding aspects, the axial rotor (7) comprises a substantially cylindrical outer annular structure, the peripheral blades (7b) of the axial rotor (7) extending between the central portion (7a) and the outer annular structure.

In a 35th aspect in accordance with any one of the preceding aspects, the peripheral blades (7b) of the axial rotor (7) are joined in one piece with the central portion (7a) thereof so as to form a single monoblock body.

In a 36th aspect in accordance with the preceding aspect when dependent on the 34th aspect, the peripheral blades (7b) of the axial rotor (7) are also joined in a single piece with the outer annular structure, whereby the rotation of the axial rotor (7) about the rotation axis (Y) thereof causes the integral rotation of the central portion (7a), the peripheral blades (7b) and the outer annular structure.

In a 36th-bis aspect in accordance with any one of the preceding aspects, the central portion (7a) of the axial rotor (7) has a transverse overall dimension not less than the transverse overall dimension of the central portion (9) of the axial straightening stator (8), optionally substantially equal to the central portion (9) of the axial straightening stator (8).

In a 36th-ter aspect in accordance with any one of the preceding aspects, the central portion (7a) of the axial rotor (7) has a substantially rounded shape, with convexity facing opposite the axial straightening stator (8).

In a 37th aspect in accordance with any one of the preceding aspects, the central portion (7a) of the axial rotor (7) has a substantially hemispherical or ball cap shape, with convexity facing opposite the axial straightening stator (8).

In a 38th aspect in accordance with any one of the preceding aspects, the central portion (7a) of the axial rotor (7) has a substantially ogive shape, in which the transverse section of the central portion (7a) increases approaching the axial straightening stator (8) to reach a transverse dimension not less than the transverse dimension of the central portion (9) of the axial straightening stator (8).

In a 39th aspect in accordance with any one of the preceding aspects, the portable blower (1) comprises at least one handle portion (2a) arranged on the structure (2) for manual engagement by a user.

In a 40th aspect in accordance with the preceding aspect, the handle portion (2a) is made at or near the suction zone (4).

In a 41st aspect in accordance with any one of the two preceding aspects, the handle portion (2a) is provided with a drive control (2b), optionally a double drive control for safely starting the flow generator device (6) by the user using both hands.

In a 42nd aspect in accordance with any one of the three preceding aspects, the handle portion (2a) is provided with a control command (2c) of the intensity of the air flow produced by the air flow generator device (6), the control device (2c) allowing the adjustment of the number of revolutions of the axial rotor (7) of the air flow generator device (6).

In a 43rd aspect in accordance with any one of the preceding aspects, the portable blower (1) has an electrical power supply.

In a 44th aspect in accordance with the preceding aspect, the flow generator device (6) is electrically powered by means of at least one battery, in particular rechargeable, optionally the at least one battery being housable in a seat (2d) provided with corresponding contacts and/or electrical conductors made and/or obtained in a rear appendage (2e) of the structure (2) of the portable blower (1).

In a 45th aspect in accordance with the preceding aspect, the portable blower (1) has, along the conduit (3) of the structure (2), upstream and/or downstream of the flow generator device (6) at least one protection grille (16) arranged to create a physical barrier between the suction zone (4) of the structure (2) and the flow generator device (6) and/or between the latter and the blowing opening (10), the protection grille (16) avoiding reaching the flow generator device (6) along the conduit (3) of the structure (2) through the suction zone (4) and/or the blowing opening (10).

Further features and advantages will become more apparent from the detailed description of a preferred, but not exclusive, embodiment of a portable blower in accordance with the above-listed aspects, the following claims and the attached figures.

### Brief description and drawings

A detailed description of one or more preferred embodiments of the invention is given below by way of non-limiting example, in which:
- figure 1 is a perspective view of a portable blower of the type usable in outdoor areas, such as roads, gardens, parks and/or the like, for blowing and pushing leaves, small debris, garbage and the like, in accordance with the present invention;
- figure 2 is an exploded perspective view of the portable blower of figure 1;
- figure 3 is a longitudinal section of the portable blower of figures 1 and 2;
- figure 4 is an enlargement of a detail of the portable blower illustrated in figure 3;
- figure 5 is a perspective view of a component of the portable blower visible in figures 2 to 4;
- figure 6 is a perspective view of a further component of the portable blower also visible in figures 2 to 4;
- figure 7 is a perspective view of an assembly of components of the portable blower visible in figures 2 to 4.

### Detailed description

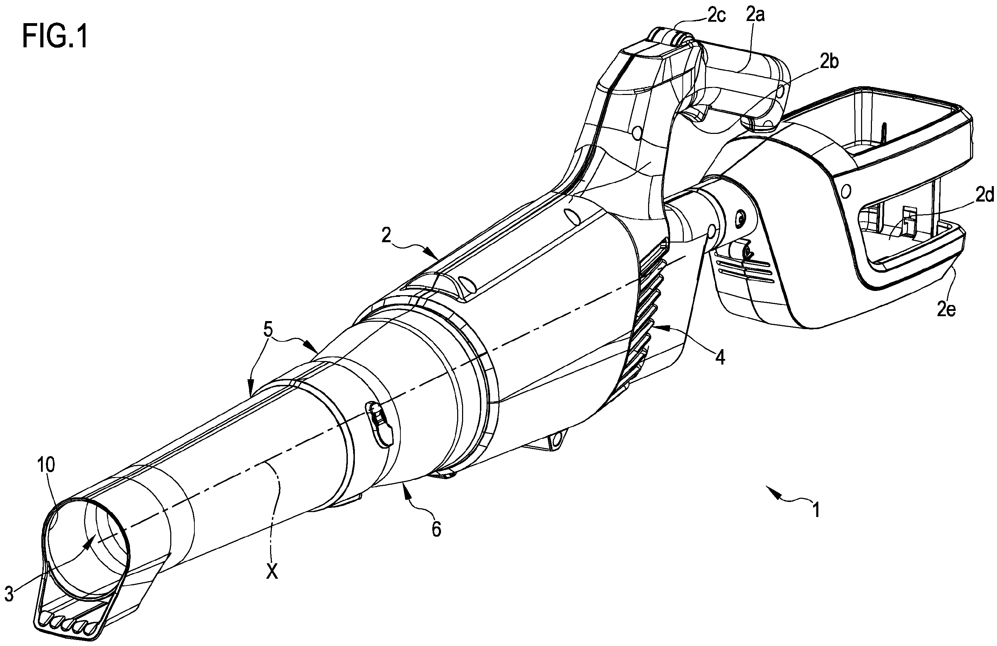

With reference to figures 1 to 3, a portable blower 1 is illustrated which is intended for maintenance operations, and/or cleaning outdoor areas, such as roads, gardens, parks and/or the like. In particular, the portable blower 1 is used for the removal, by means of air blowing, of leaves, small debris, garbage and any other small body, object or item, present and bulky on the ground, soil or road to be cleaned.

The portable blower 1 comprises a structure 2, at least partially hollow, defining at least one conduit 3 intended for the transit of an air flow between a suction zone 4 and a blowing end 5.

The portable blower 1 further comprises a flow generator device 6 which operatively resides inside the structure 2 to operate at the conduit 3 of the latter. The flow generator device 6 is switchable between a non-operating condition, in which no air flow is generated along the conduit 3 of the structure 2 and an operating condition, in which at least one air flow is generated along the conduit 3 between the suction zone 4 and the blowing end 5, to exit through a corresponding blowing opening 10.

In detail, the flow generator device 6 comprises at least one axial rotor 7 operatively arranged inside the conduit 3 of the structure 2 and arranged to rotate about a rotation axis Y, which in the embodiment solution illustrated in the attached figures also coincides with a longitudinal extension axis X of the structure 2 and/or of the conduit 3 of the latter, and at least one axial straightening stator 8 operatively arranged inside the conduit 3 of the structure 2 between the axial rotor 7 and the blowing opening 10 of the portable blower 1, to straighten the air flow generated by the axial rotor 7 when the flow generator device 6 is in the operating condition.

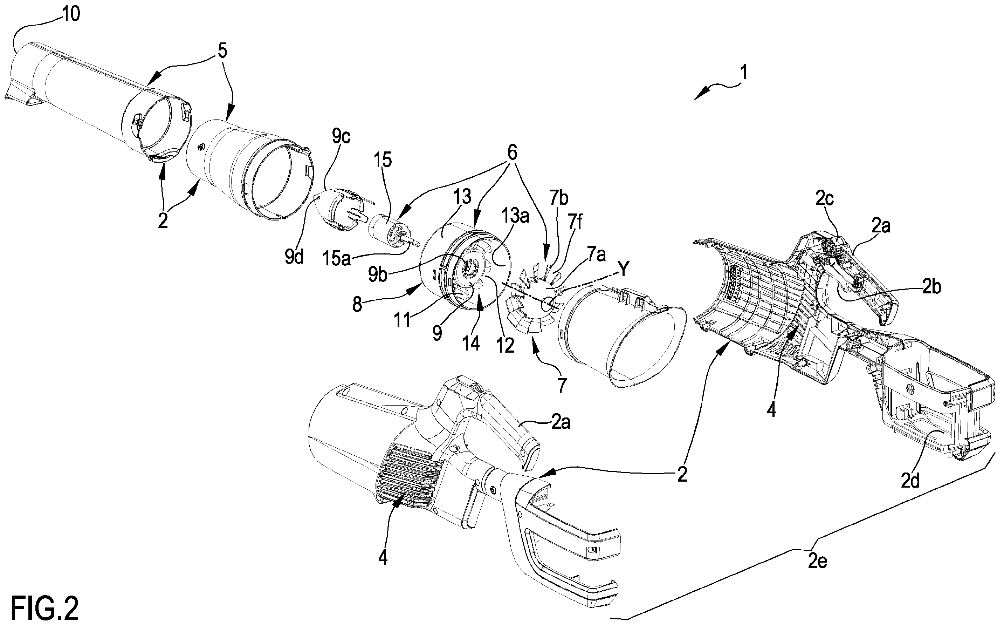

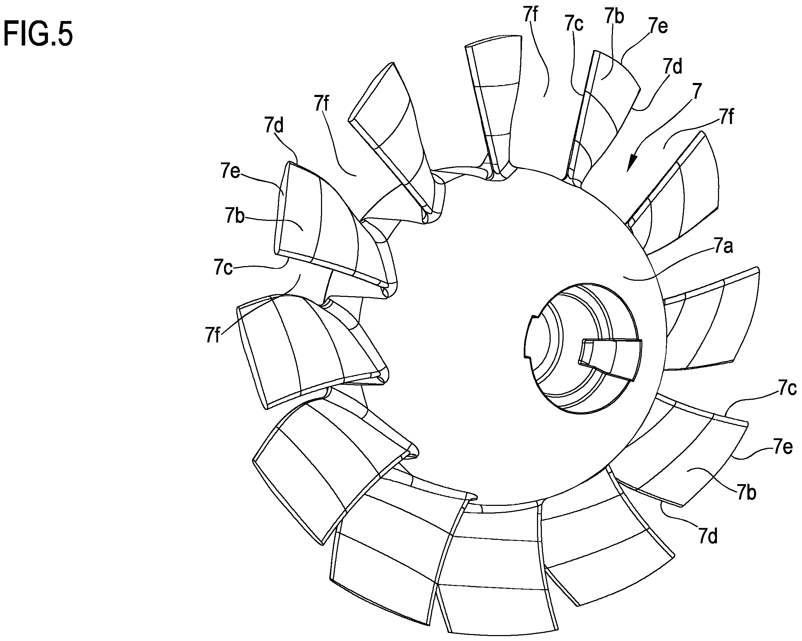

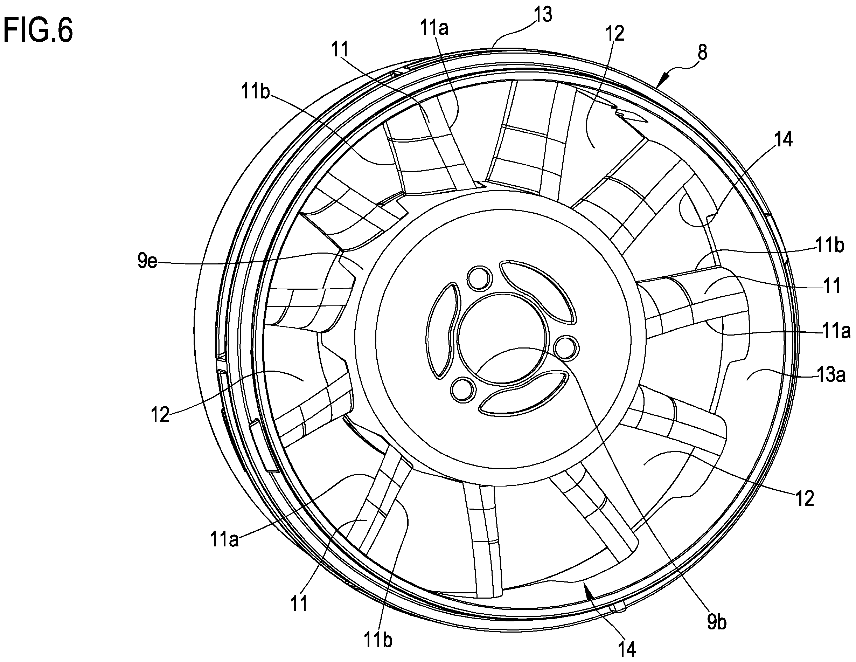

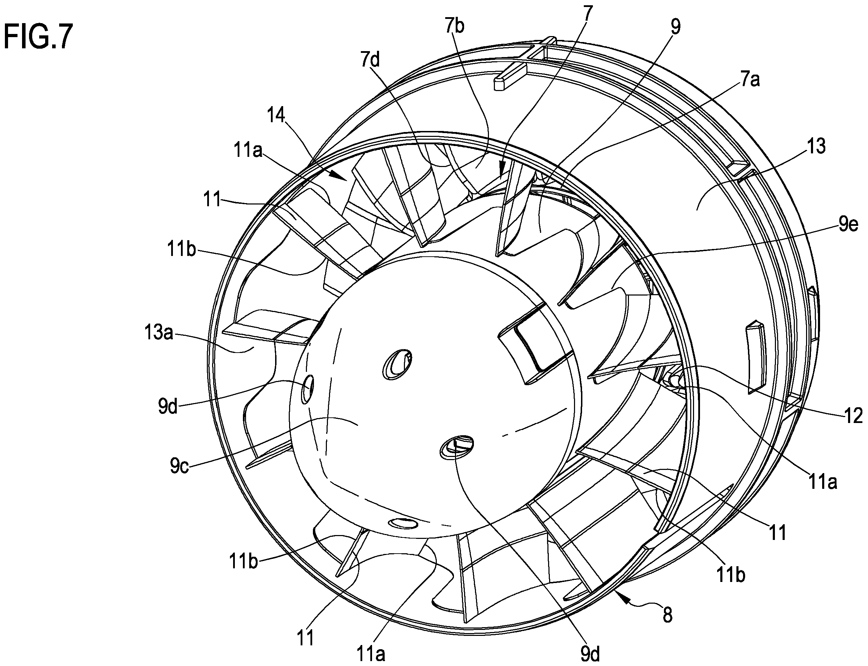

As visible in figures 2 to 5 and 7, the axial rotor 7 is provided with a central portion 7a and a plurality of peripheral blades 7b circumferentially distributed around the central portion 7a, which are separated from each other to define a corresponding plurality of peripheral channels 7f for the passage of air in transit. The peripheral channels 7f are interspersed with the corresponding peripheral blades 7b of the axial rotor 7. When the flow generator device 6 is switched in the operating condition, the axial rotor 7 is driven in rotation about the corresponding rotation axis Y to generate an air flow along the conduit 3 of the structure 2 of the portable blower 1, towards the blowing opening 10. With reference instead to figures 2 to 4, 6 and 7, the axial straightening stator 8 comprises a central portion 9 and a plurality of peripheral straightening blades 11 circumferentially distributed around the central portion 9, which are separated from each other to define a corresponding plurality of peripheral straightening channels 12 for the passage of air in transit. The straightening channels 12 are interspersed with the respective peripheral straightening blades 11 of the axial straightening stator 8.

In accordance with a first embodiment solution of the present invention, the total number of peripheral straightening blades 11 of the axial straightening stator 8 differs from the total number of peripheral blades 7b of the axial rotor 7 and are coprime.

In more detail, the total number of peripheral straightening blades 11 of the axial straightening stator 8 differs from the total number of peripheral blades 7b of the axial rotor 7 by not more than three units and in particular by one unit, where unit is intended as a blade 7b, 11.

In accordance with a further embodiment solution of the present invention, the total number of peripheral straightening blades 11 of the axial straightening stator 8 is neither a sub-multiple nor a multiple of the total number of peripheral blades 7b of the axial rotor 7 and vice versa.

Furthermore, the total number of straightening blades 11 of the axial straightening stator 8 and the total number of peripheral blades 7b of the axial rotor 7 have no common divider except for the number one.

In accordance with a possible embodiment solution of the present invention, the total number of peripheral straightening blades 11 of the axial straightening stator 8 is less than or equal to twenty-three and in particular corresponds to eleven or twelve, while the total number of peripheral blades 7b of the axial rotor 7 is less than or equal to twenty-three and in particular corresponds to twelve or eleven.

In accordance with another possible embodiment solution of the present invention, the total number of peripheral straightening blades 11 of the axial straightening stator 8 is greater than or equal to seven and in particular corresponds to eleven or twelve, while the total number of peripheral blades 7b of the axial rotor 7 is greater than or equal to seven and in particular corresponds to twelve or eleven.

In accordance with a preferred embodiment solution, the total number of peripheral straightening blades 11 of the axial straightening stator 8 is greater or less than the total number of peripheral blades 7b of the axial rotor 7 by one unit, i.e., by one blade, and at least one of the axial rotor 7 or the axial straightening stator 8 has eleven blades, whereby the other has twelve. Therefore, if the total number of peripheral straightening blades 11 of the axial straightening stator 8 corresponds to twelve, it is preferable that the total number of peripheral blades 7b of the axial rotor 7 corresponds to eleven. On the contrary, if the number of peripheral blades 7b of the axial rotor 7 corresponds to twelve, it is preferable that the number of peripheral straightening blades 11 of the axial straightening stator 8 corresponds to eleven.

With particular attention to the shape and structure of the axial rotor 7 and the axial straightening stator 8 of the flow generator device 6 of the portable blower 1, the peripheral blades 7b of the axial rotor 7 are identical to each other and are equidistant, and the peripheral straightening blades 11 of the axial straightening stator 8 are also identical to each other and are equidistant.

The peripheral blades 7b of the axial rotor 7 and the peripheral straightening blades 11 of the axial straightening stator 8 are distributed symmetrically with respect to a central axis respectively of the axial rotor 7 and of the axial straightening stator 8 which, in the embodiment solution illustrated in the attached figures, coincides with both the rotation axis Y of the axial rotor 7 and with the longitudinal extension axis X of the structure 2 and/or of the conduit 3 of the portable blower 1.

Each peripheral blade 7b of the axial rotor 7 has an overall dimension, detectable between a corresponding inlet edge 7c facing opposite the axial straightening stator 8 and a respective outlet edge 7d facing the axial straightening stator 8 along the longitudinal extension axis X of the structure 2 and/or the conduit 3, comprised between 15 mm and 22 mm, optionally comprised between 18 mm and 19 mm, while each peripheral straightening blade 11 of the axial straightening stator 8 has a maximum longitudinal extension, detectable between a corresponding inlet edge 11a facing the axial rotor 7 and a corresponding outlet edge 11b, facing the opposite side with respect to the axial rotor 7, along the longitudinal extension axis X of the structure 2 and/or of the conduit 3 of the portable blower 1, comprised between 25 mm and 35 mm, optionally substantially equal to 30 mm.

In addition, each peripheral blade 7b of the axial rotor 7 has a thickness comprised between 1 mm and 3 mm, optionally comprised between 1.5 mm and 2.3 mm, in particular substantially equal to 1.8 mm, while each peripheral straightening blade 11 of the axial straightening stator 8 has a thickness comprised between 1.2 mm and 1.8 mm, optionally substantially equal to 1.5 mm.

With particular reference to the thickness of each peripheral straightening blade 11 of the axial straightening stator 8, it is variable between the attachment edge 11a and the outlet edge 11b. In detail, the thickness increases from the attachment edge 11a to the outlet edge 11b until a maximum thickness is reached, which in the illustrated embodiment solution corresponds to approximately 1.5 mm to be lowered subsequently, always towards the outlet edge 11b, reaching a thickness comprised between 0.25 mm and 0.45 mm, optionally comprised between 0.35 mm and 0.4 mm. As can be clearly seen in figures 2 and from 5 to 7, each peripheral blade 7b of the axial rotor 7 has a substantially twisted extension, with an inclined profile with respect to a reference plane transverse to the conduit 3 of the structure 2 of the portable blower 1. Each peripheral straightening blade 11 of the axial straightening stator 8 also has a substantially arched and/or twisted extension, with a profile which is more rounded and inclined with respect to a reference plane transverse to the conduit 3 of the structure 2 of the portable blower 1 at the respective inlet edge 11a, and with a profile which is less rounded and inclined with respect to the same reference plane transverse to the conduit 3 of the structure 2 of the portable blower 1, at the respective outlet edge 11b. The profile of each peripheral straightening blade 11 at the respective outlet edge 11b tends to be substantially parallel to the longitudinal extension axis X of the structure 2 and/or of the conduit 3 of the portable blower 1 and/or to the rotation axis Y of the axial rotor 7.

In addition, the peripheral blades 7b of the axial rotor 7 are arranged according to orientations convergent to the peripheral straightening blades 11 of the axial straightening stator 8 so that the swirling air flow produced by the axial rotor 7, when the flow generator device 6 is in the operating condition, is channelled between the peripheral straightening blades 11 of the axial straightening stator 8, i.e., into the peripheral straightening channels 12 to assume a linear and/or substantially laminar trend.

As visible in figures 2 to 4, 6 and 7, the axial straightening stator 8 has an outer cap 13 having a substantially annular shape which has an inner surface of cylindrical extension 13a to which the peripheral straightening blades 11 are connected. The inner surface of cylindrical extension 13a is substantially parallel to a cylindrical outer surface 9e of the central portion 9 of the axial straightening stator 8 to which the peripheral straightening blades 11 are also connected.

The outer cap 13 and the central portion 9 of the axial straightening stator 8 define a corresponding conduit 14 for the transit of the air flow produced by the axial rotor 7, when the flow generator device 6 is in the operating condition. In detail, the conduit 14 for the transit of the air flow delimited between the outer cap 13 and the central portion 9 of the axial straightening stator 8 define a longitudinal portion of the conduit 3 of the structure 2 of the portable blower 1.

In accordance with the substantially tubular structure of the axial straightening stator 8 just described, the peripheral straightening blades 11 extend between the central portion 9 and the outer cap 13 of the axial straightening stator 8. According to a possible embodiment solution of the present invention, the peripheral straightening blades 11 of the axial straightening stator 8 are joined in a single piece with the central portion 9 and the outer cap 13 thereof, forming, with the latter, a single monoblock body.

As visible in figures 2 to 4, the central portion 9 of the axial straightening stator 8 is internally hollow to define a housing chamber 9a for a motor 15, optionally electric, for driving the axial rotor 7 about the respective rotation axis Y, when the flow generator device 6 is in the operating condition.

It is also possible to envisage that the axial rotor 7 of the flow generator device 6 is driven in rotation by an endothermic motor. In this case, the structure of the axial straightening stator 8 and/or the structure 2 of the portable blower 1 can undergo changes merely to adapt to the dimensions and shapes of such a motor.

In order to allow a transmission between the electric motor 15 and the axial rotor 7 of the flow generator device 6, the central portion 9 of the axial straightening stator 8 has, on the side facing the axial rotor 7, a through opening 9b which extends substantially centrally and longitudinally. Such a through opening 9b allows a transmission shaft 15a of the electric motor 15 to extend axially through the central portion 9 of the axial straightening stator 8 to key in the central portion 7a of the axial rotor 7. Thereby, when the flow generator device 6 is in the operating condition, the electric motor 15 rotates the axial rotor 7 about the respective rotation axis Y.

On the opposite side with respect to the axial rotor 7, the central portion 9 of the axial straightening stator 8 has an outlet body 9c of slender and/or tapered shape, in particular of substantially ogive shape, optionally pointed.

As visible in figure 2, the outlet body 9c of the central portion 9 of the axial straightening stator 8 is removable from the central portion 9 of the latter to allow access to the housing chamber 9a and, therefore, access to the electric motor 15 housed therein.

The outlet body 9c of the central portion 9 of the axial straightening stator 8 has a plurality of through openings 9d which put the housing chamber 9a in fluid communication with the part of the conduit 3 of the structure 2 of the portable blower 1 which is downstream of the axial straightening stator 8 in the advancement direction of the air flow when the flow generator device 6 is in the operating condition. The through openings 9d allow the air entering through the through opening 9b of the central portion 9 to flow towards the blowing opening 10, cooling the electric motor 15 which is located inside the housing chamber 9a.

As visible in figures 2 to 5, each peripheral blade 7b of the axial rotor 7 extends from the central portion 7a of the latter to end with a respective end edge 7e at the inner surface of cylindrical extension 13a of the outer cap 13 or of the conduit 14 of the axial straightening stator 8, which define a portion of the conduit 3 of the structure 2 of the portable blower 1.

More in particular, each peripheral blade 7b of the axial rotor 7 ends near the inner surface of cylindrical extension 13a of the outer cap 13 or of the conduit 14 of the axial straightening stator 8 almost lapping the latter and are joined in a single piece with the central portion 7a thereof so as to form a single monoblock body.

In detail, the end edge 7e of each peripheral blade 7b of the axial rotor 7 is spaced from the inner surface of cylindrical extension 13a of the outer cap 13 or conduit 14 of the axial straightening stator 8 by a measurement comprised between 0.7 mm and 0.3 mm, optionally substantially equal to 0.3 mm.

In accordance with an alternative embodiment solution, not depicted in the attached figures, it can be envisaged that the axial rotor 7 is provided with a substantially cylindrical outer annular structure to which the peripheral blades 7b of the axial rotor 7 are connected, optionally joined in a single piece, so that when the central portion 7a of the axial rotor 7 rotates about the rotation axis Y, the peripheral blades 7b and the outer annular structure also rotate integrally. In this case, the outer annular structure of the axial rotor 7 can lap the inner surface of cylindrical extension 13a of the outer cap 13 or of the conduit 14 of the axial straightening stator 8 or occupy a corresponding annular seat obtained in the inner surface of cylindrical extension 13a of the outer cap 13 or of the conduit 14 of the axial straightening stator 8. As visible in figures 2 to 5, the central portion 7a of the axial rotor 7 has a transverse overall dimension which is not less than the transverse overall dimension of the central portion 9 of the axial straightening stator 8. In particular, the transverse overall dimension of the central portion 7a of the axial rotor 7 is identical to the transverse overall dimension of the central portion 9 of the axial straightening stator 8.

Furthermore, the central portion 7a of the axial rotor 7 has a substantially rounded shape, with convexity facing opposite the axial straightening stator 8. In detail, the central portion 7a of the axial rotor 7 has a substantially hemispherical or ball cap shape, with convexity facing opposite the axial straightening stator 8, i.e., towards the suction zone 4 of the structure 2 of the portable blower 1.

It can also be envisaged that the central portion 7a of the axial rotor 7 has a substantially ogive shape, different from the spherical cap illustrated in figures 2 to 5. A more slender, tapered and/or elongated shape towards the suction zone 4 of the structure 2 of the portable blower 1 can be used, however having transverse overall dimensions not less than the overall transverse dimensions of the central portion 9 of the axial straightening stator 8.

The combination between the shape of the central portion 7a of the axial rotor 7 and the dimensions or transverse overall dimensions thereof allows the orientation of the suction air flow through the suction zone 4 of the structure 2 of the portable blower 1 towards the peripheral zone of the peripheral blades 7b where the suction air flows through the peripheral channels 7f of the axial rotor 7 to then channel into the subsequent peripheral straightening channels 12 of the axial straightening stator 8.

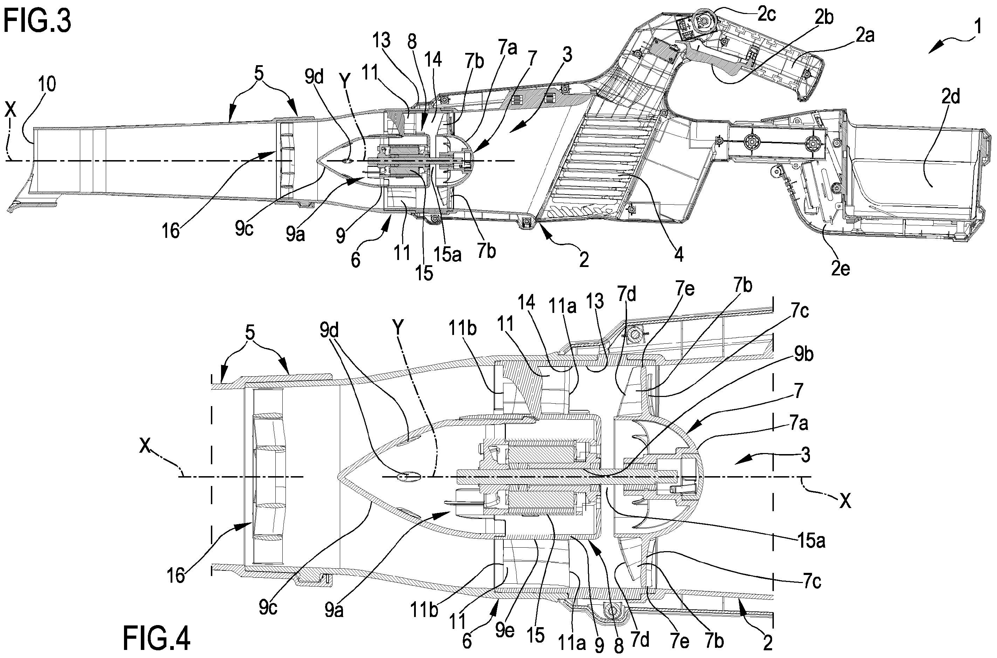

As visible in figures 3 and 4, the portable blower 1 also comprises, along the conduit 3 of the structure 2, downstream of the air flow generator device 6, in the transit or advancement direction of the air flow produced by the latter, a protection grille 16 with the purpose of creating a physical barrier between the air flow generator device 6 and the blowing opening 10. The protection grille 16 prevents reaching the air flow generator device 6 along the conduit 3 of the structure 2 through the blowing opening 10, so as to protect anyone from coming into contact with moving or hot parts of the portable blower 1 which can cause physical damage or injury.

### Advantages

The present invention allows to solve the problems found in the prior art and to obtain the following advantages.

Firstly, the envisaged and described configurations related to the total number of peripheral blades of the axial rotor and the total number of peripheral straightening blades of the axial straightening stator allow the complete elimination or in any case a significant reduction of the vibrations which are produced during the operation of the flow generator device when the portable blower is used for the usual maintenance operations and cleaning green areas and/or any area to be cleaned.

It should further be considered that the configurations described in relation to the axial rotor and the axial straightening stator also allow the total elimination or in any case an effective reduction of the noise produced during the operation of the flow generator device.

Lastly, but no less important than the other advantages above, the configurations described in relation to the axial rotor and the axial straightening stator of the flow generator device allow both an objective improvement in the efficiency of the air flow produced, and an improvement in the quality of the blowing air flow in output, where quality is intended as the homogeneity level of the flow produced which must not have turbulence or, in any case, must not have an excessive presence of turbulence and must not have turbulence of significant magnitude.

## Claims

1. Portable blower (1) comprising:
- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) which is switchable between a non-operating condition, in which no air flow is generated along the conduit (3) of the structure (2) and an operating condition, in which an air flow is generated along the conduit (3) of the structure (2) between the suction zone (4) and the blowing end (5) or the blowing opening (10), wherein the flow generator device (6) comprises:
∘ an axial rotor (7) operatively arranged inside the conduit (3) of the structure (2) and arranged to rotate about a rotation axis (Y), the axial rotor (7) being provided with a central portion (7a) and with a plurality of peripheral blades (7b) circumferentially distributed around the central portion (7a), the peripheral blades (7b) of the axial rotor (7) being separated from each other to define a corresponding plurality of peripheral channels (7f), the axial rotor (7) being rotatably drivable about the corresponding rotation axis (Y) when the flow generator device (6) is switched in the operating condition to generate an air flow along the conduit (3) towards the blowing opening (10);
∘ an axial straightening stator (8) operatively arranged inside the conduit (3) of the structure (2) between the axial rotor (7) and the blowing end (5) or the blowing opening (10) of the portable blower (1) to straighten the air flow generated by the axial rotor (7) when the flow generator device (6) is in the operating condition, the axial straightening stator (8) comprising a central portion (9) and a plurality of peripheral straightening blades (11) circumferentially distributed around the central portion (9), the peripheral straightening blades (11) being separated from each other to define a corresponding plurality of peripheral straightening channels (12),
wherein a total number of peripheral straightening blades (11) of the axial straightening stator (8) differs from a total number of peripheral blades (7b) of the axial rotor (7), the total number of peripheral straightening blades (11) of the axial straightening stator (8) and the total number of peripheral blades (7b) of the axial rotor (7) being coprime, optionally the total number of peripheral straightening blades (11) of the axial straightening stator (8) being neither a sub-multiple nor a multiple of the total number of peripheral blades (7b) of the axial rotor (7) and vice versa, in particular the total number of straightening blades (11) of the axial straightening stator (8) and the total number of peripheral blades (7b) of the axial rotor (7) having no common dividers except for the number one.

2. Portable blower (1) according to claim 1, wherein the total number of peripheral straightening blades (11) of the axial straightening stator (8) differs from the total number of peripheral blades (7b) of the axial rotor (7) by not more than three units and in particular by one unit, i.e., by one blade.

3. Portable blower (1) according to any one of the preceding claims, wherein the total number of peripheral straightening blades (11) of the axial straightening stator (8) is less than or equal to twenty-three and in particular corresponds to eleven or twelve, while the total number of peripheral blades (7b) of the axial rotor (7) is less than or equal to twenty-three and in particular corresponds to twelve or eleven.

4. Portable blower (1) according to any one of the preceding claims, wherein the total number of peripheral straightening blades (11) of the axial straightening stator (8) is greater than or equal to seven and in particular corresponds to eleven or twelve, while the total number of peripheral blades (7b) of the axial rotor (7) is greater than or equal to seven and in particular corresponds to twelve or eleven.

5. Portable blower (1) according to any one of the preceding claims, wherein the total number of peripheral straightening blades (11) of the axial straightening stator (8) is less than the total number of peripheral blades (7b) of the axial rotor (7) by one unit, i.e., by one blade.

6. Portable blower (1) according to any one of claims 1 to 4, wherein the total number of peripheral straightening blades (11) of the axial straightening stator (8) is greater than the total number of peripheral blades (7b) of the axial rotor (7) by one unit, i.e., by one blade.

7. Portable blower (1) according to any one of claims 1 to 4 or 6, the total number of
peripheral straightening blades (11) of the axial straightening stator (8) corresponds to twelve, while the total number of peripheral blades (7b) of the axial rotor (7) corresponds to eleven.

8. Portable blower (1) according to any one of claims 1 to 5, the total number of
peripheral straightening blades (11) of the axial straightening stator (8) corresponds to eleven, while the total number of peripheral blades (7b) of the axial rotor (7) corresponds to twelve.

9. Portable blower (1) according to any one of the preceding claims, wherein the peripheral straightening blades (11) of the axial straightening stator (8) are distributed symmetrically with respect to a central axis of the axial straightening stator (8), optionally coinciding with the rotation axis (Y) of the axial rotor (7).

10. Portable blower (1) according to any one of the preceding claims, wherein:
- each peripheral straightening blade (11) of the axial straightening stator (8) has a maximum thickness comprised between 1.2 mm and 1.8 mm, optionally substantially equal to 1.5 mm, in particular each peripheral straightening blade (11) of the axial straightening stator (8) having a maximum longitudinal extension, detectable between a corresponding inlet edge (11a) facing the axial rotor (7) and a corresponding outlet edge (11b), facing the opposite side with respect to the axial rotor (7), along the longitudinal extension axis (X) of the structure (2) and/or of the conduit (3) of the portable blower (1), comprised between 25 mm and 35 mm, optionally substantially equal to 30 mm;
- each peripheral blade (7b) of the axial rotor (7) has a thickness comprised between 1 mm and 3 mm, optionally comprised between 1.5 mm and 2.3 mm, in particular substantially equal to 1.8 mm, in particular each peripheral blade (7b) of the axial rotor (7) having an overall dimension, detectable between a corresponding inlet edge (7c), facing opposite the axial straightening stator (8) and a respective outlet edge (7d), facing the axial straightening stator (8), along the longitudinal extension axis (X) of the structure (2) and/or of the conduit (3), comprised between 15 mm and 22 mm, optionally comprised between 18 mm and 19 mm.

11. Portable blower (1) according to any one of the preceding claims, wherein:
- each peripheral straightening blade (11) of the axial straightening stator (8) has a substantially arched and/or twisted extension, with a profile which is more rounded and inclined with respect to a reference plane transverse to the conduit (3) of the structure (2) of the blower (1) at a respective inlet edge (11a) substantially facing the axial rotor (7), and with a less rounded and inclined profile with respect to a reference plane transverse to the conduit (3) of the structure (2) of the blower (1) at a respective outlet edge (11b) facing the opposite side with respect to the axial rotor (7), optionally tending to a profile substantially parallel to the longitudinal extension axis (X) of the structure (2) and/or of the conduit (3) of the latter and/or of the rotation axis of the axial rotor (7);
- each peripheral blade (7b) of the axial rotor (7) has a substantially twisted extension, with an inclined profile with respect to a reference plane transverse to the conduit (3) of the structure (2) of the portable blower (1), optionally the peripheral blades (7b) of the axial rotor (7) being arranged according to orientations convergent to the peripheral straightening blades (11) of the axial straightening stator (8).

12. Portable blower (1) according to any one of the preceding claims, wherein the axial straightening stator
(8) further has an outer cap (13) having an inner surface of cylindrical extension (13a) which, together with an outer surface (9e) of the central portion (9) of the axial straightening stator (8), defines a corresponding conduit (14) for the transit of an air flow when the flow generator device (6) is in the operating condition, the conduit (14) for the transit of the air flow defining a longitudinal portion of the conduit (3) of the structure (2) of the portable blower (1), optionally the peripheral straightening blades (11) being joined in a single piece to the central portion (9) and to the outer cap (13) of the axial straightening stator (8) to form, with the latter, a single monoblock body.

13. Portable blower (1) according to any one of the preceding claims, wherein the central portion (9) of the axial straightening stator (8) is internally hollow to define at least one housing chamber (9a) for a motor (15), optionally electric, for driving the flow generator device (6), in particular for driving the axial rotor (7) of the latter in rotation about the rotation axis (Y), in particular the central portion (9) of the axial straightening stator (8) having a through opening (9b) extending substantially centrally and longitudinally, a transmission shaft (15a) of the motor (15) extending through the through opening (9b) of the central portion (9) of the axial straightening stator (8) and being keyed, on the side opposite the latter, to the central portion (7a) of the axial rotor (7) for rotating the axial rotor (7) about the respective rotation axis (Y) when the flow generator device is in the operating condition;
optionally wherein the central portion (9) of the axial straightening stator (8) has, on the opposite side with respect to the axial rotor (7), at least one outlet body (9c) of slender and/or tapered shape, optionally of substantially ogive shape, in particular of substantially pointed shape, even more optionally the outlet body (9c) of the central portion (9) of the axial straightening stator (8) being removable from the central portion (9) to allow access to the housing chamber (9a).

14. Portable blower (1) according to claim 12 or according to claim 13, when dependent on claim 12, wherein each peripheral blade (7b) of the axial rotor (7) extends from the central portion (7a) of the latter to end with a respective end edge (7e), at the inner surface of cylindrical extension (13a) of the outer cap (13) of the axial straightening stator (8), optionally the end edge (7e) of each peripheral blade (7b) of the axial rotor (7) being spaced from the inner surface of the conduit (3) of the structure (2) of the portable blower (1) of the outer cap (13) of the straightening stator (8) by a measurement comprised between 0.7 mm and 0.3 mm, optionally substantially equal to 0.5 mm.

15. Portable blower (1) according to any one of the preceding claims, wherein the central portion (7a) of the axial rotor (7) has a transverse overall dimension not less than the transverse dimension of the central portion (9) of the axial straightening stator (8), optionally substantially equal to the central portion (9) of the axial straightening stator (8), in particular the central portion (7a) of the axial rotor (7) having a substantially rounded shape, with convexity facing away from the axial straightening stator (8), optionally the central portion (7a) of the axial rotor (7) having a substantially hemispherical or ball cap shape, with convexity facing opposite the axial straightening stator (8), in particular the central portion (7a) of the axial rotor (7) having a substantially ogive shape, in which the transverse section of the central portion (7a) increases approaching the axial straightening stator (8) to reach a transverse dimension no less than the transverse dimension of the central portion (9) of the axial straightening stator (8).
